# EUROPEAN PATENT APPLICATION

(11) **EP 2 339 074 A1**
(43) Date of publication of application: **29.06.2011**
(21) Application number: 09180717.2
(22) Date of filing: 23.12.2009
(51) Int. Cl.: E03B 3/03

(54) **A rainwater collection device**

(71) Applicant: Quigley, Brian, Co. Dublin (IE)
(72) Inventor: Quigley, Brian, Co. Dublin (IE)
(74) Representative: Roche, Dermot

(57) **Abstract**

A rainwater collection device comprises a reservoir member (1), a channel gutter element (8), a rainwater filter, and an outlet pipe (11). The reservoir member (1) may be attached to an external surface of a wall (3) of a building structure (2) beneath the eaves (4) of the building structure (2). The reservoir member (1) is employed to store rainwater. The reservoir member (1) comprises an inlet port (6) to facilitate entry of rainwater into the interior (7) of the reservoir member (1). The channel element (8) promotes flow of rainwater towards the inlet port (6). The reservoir member (1) comprises an outlet port (9) to facilitate exit of rainwater from the interior (7) of the reservoir member (1). The outlet pipe (11) connects the outlet port (9) in fluid communication with a water plumbing system (10) of the building structure (2).

## Description

### Introduction

This invention relates to a rainwater collection device.

### Statements of Invention

According to the invention there is provided a rainwater collection device comprising
a reservoir member for at least temporarily storing rainwater,
the reservoir member being configured to be mounted to a building structure.

The rainwater collected by the device of the invention may be used for household purposes, garden purposes, washing purposes and the like.

In one embodiment of the invention the reservoir member comprises an inlet port to facilitate entry of rainwater into the interior of the reservoir member. Preferably the device comprises means to promote flow of rainwater towards the inlet port. This arrangement maximises the amount of rainwater which enters the interior of the reservoir member. Ideally the flow promotion means comprises a channel element. Most preferably the channel element is substantially 'U'-shaped in cross section. The flow promotion means may be located along an upper surface of the reservoir member. Preferably the flow promotion means is formed integrally with the reservoir member. In this manner the invention provides a device which is compact and easy to install. The flow promotion means may be configured to be mounted to a building structure. Preferably the device comprises means to filter rainwater. By filtering the rainwater, this enables the water to be used for a wide variety of purposes. Ideally the filtration means is located in the region of the inlet port.

In another embodiment the reservoir member comprises an outlet port to facilitate exit of rainwater from the interior of the reservoir member. Preferably the device comprises means to connect the outlet port in fluid communication with a water system of a building structure. This arrangement enables the collected rainwater to be used in a simple and convenient manner via the existing water system of the building structure. The rainwater may flow under the action of gravitational forces from the outlet port to the water system of the building structure. Ideally the reservoir member comprises an overflow port to facilitate exit of overflow rainwater from the interior of the reservoir member. Most preferably the device comprises means to connect the overflow port in fluid communication with a water drainage system.

In one case the device comprises means to attach the reservoir member to a building structure. Preferably the device comprises means to attach the reservoir member to a wall of a building structure. The device may comprise means to attach the reservoir member to an external surface of a wall of a building structure. The device may comprise means to attach the reservoir member to an internal surface of a wall of a building structure. In this manner a particularly secure attachment of the reservoir member to the wall may be achieved without compromising the structural integrity of the wall. The reservoir member may be configured to be housed at least partially within a building structure. The reservoir member may be configured to be embedded at least partially within a building structure. Ideally the reservoir member is configured to be mounted to a building structure beneath the eaves of the building structure. The reservoir member may be mounted to an existing building structure or may be mounted to a new building structure during the stage of construction of the new building structure. Most preferably the reservoir member is configured to be mounted to a building structure above ground level. The reservoir member may be configured to be mounted to a building structure above the level of an upper surface of a window and/or above the level of an upper surface of a door of the building structure.

In another case the device comprises means to cover at least part of the reservoir member. In this manner the aesthetic appearance of a building structure may be retained. Preferably the cover means is mountable to the reservoir member. The cover means may be mountable to the reservoir member when the reservoir member is mounted to a building structure. Ideally the cover means is selectively removable from the reservoir member. This arrangement enables ease of access to the reservoir member to facilitate maintenance and the like.

In one embodiment the device comprises means to cover at least part of an external surface of a building structure. Preferably the cover means is supported by the reservoir member. Ideally the cover means protrudes from the reservoir member. Most preferably the cover means protrudes upwardly from an upper surface of the reservoir member.

In another embodiment the device comprises a first reservoir member and a second reservoir member. Preferably the device comprises means to connect the first reservoir member in fluid communication with the second reservoir member. This arrangement maximises the amount of rainwater collected in respect of the building structure. The connection means may be configured to connect the first reservoir member in fluid communication with the second reservoir member with the longitudinal axis of the first reservoir member substantially parallel to the longitudinal axis of the second reservoir member. Preferably the connection means is configured to connect the first reservoir member in fluid communication with the second reservoir member with the longitudinal axis of the first reservoir member substantially in-line with the longitudinal axis of the second reservoir member. In this manner two reservoir members which are on the same wall of the building structure may be connected together. The connection means may be configured to connect the first reservoir member in fluid communication with the second reservoir member with the longitudinal axis of the first reservoir member non-parallel to the longitudinal axis of the second reservoir member. Preferably the connection means is configured to connect the first reservoir member in fluid communication with the second reservoir member with the longitudinal axis of the first reservoir member substantially perpendicular to the longitudinal axis of the second reservoir member. In this manner two reservoir members which are on two different walls of the building structure may be connected together.

In one case the first reservoir member is nestable with the second reservoir member. The first reservoir member may be nestable with the second reservoir member when the first reservoir member is mounted to a building structure and the second reservoir member is mounted to the building structure. This arrangement enables the number of reservoir members which may be mounted to a building structure to be maximised. Preferably the reservoir member comprises a protruding element and a corresponding recess. Ideally the protruding element of one of the first reservoir member or the second reservoir member is insertable into the recess of the other of the second reservoir member or the first reservoir member.

The invention also provides in another aspect a building structure comprising a rainwater collection device of the invention.

### Brief Description of the Drawings

The invention will be more clearly understood from the following description of some embodiments thereof, given by way of example only, with reference to the accompanying drawings, in which:
Fig. 1 is an isometric view of a reservoir member of a rainwater collection device according to the invention,
Fig. 2 is an isometric view of the reservoir member of Fig. 1 mounted to a building structure,
Fig. 3 is an enlarged isometric view of the reservoir member of Fig. 1 mounted to the building structure of Fig. 2,
Fig. 4 is another enlarged isometric view of the reservoir member of Fig. 1 mounted to the building structure of Fig. 2,
Fig. 5 is a front view of the reservoir member of Fig. 1 mounted to the building structure of Fig. 2,
Fig. 6 is an isometric view of the reservoir member of Fig. 1 mounted to the building structure of Fig. 2,
Fig. 7 is a cross sectional end view of the reservoir member of Fig. 1 mounted to the building structure of Fig. 2,
Fig. 8 is an isometric view of a reservoir member and a cover member of another rainwater collection device according to the invention,
Fig. 9 is an isometric view of the cover member of Fig. 8,
Fig. 10 is an isometric view of the reservoir member and the cover member of Fig. 8 mounted to a building structure,
Fig. 11 is an isometric view of a reservoir member and a shield member of another rainwater collection device according to the invention,
Fig. 12 is an isometric view of the reservoir member and the shield member of Fig. 11 mounted to a building structure,
Fig. 13 is an enlarged isometric view of the reservoir member and the shield member of Fig. 11 mounted to the building structure of Fig. 12,
Fig. 14 is an isometric view of a reservoir member and a channel element of another rainwater collection device according to the invention,
Fig. 15 is another isometric view of the reservoir member and the channel element of Fig. 14,
Fig. 16 is an isometric view of the reservoir member and the channel element of Fig. 14 mounted to a building structure,
Fig. 17 is an enlarged isometric view of the reservoir member and the channel element of Fig. 14 mounted to the building structure of Fig. 16,
Fig. 18 is another enlarged isometric view of the reservoir member and the channel element of Fig. 14 mounted to the building structure of Fig. 16,
Fig. 19 is a cut away isometric view of a reservoir member and a channel element of another rainwater collection device according to the invention mounted to a building structure,
Fig. 20 is another cut away isometric view of the reservoir member and the channel element of Fig. 19 mounted to the building structure of Fig. 19,
Fig. 21 is another cut away isometric view of the reservoir member and the channel element of Fig. 19 mounted to the building structure of Fig. 19,
Fig. 22 is an isometric view of a reservoir member and a channel element of another rainwater collection device according to the invention,
Fig. 23 is an isometric view of another reservoir member and another channel element of the rainwater collection device according to the invention,
Fig. 24 is an isometric view of a corner connector element of the rainwater collection device according to the invention,
Fig. 25 is an isometric view of a straight connector element of the rainwater collection device according to the invention,
Fig. 26 is an isometric view of an end cap element of the rainwater collection device according to the invention,
Fig. 27 is an isometric view of the reservoir member and the channel element of Fig. 22, the corner connector element of Fig. 24, and the end cap element of Fig. 26 mounted to a building structure,
Fig. 28 is an enlarged isometric view of the reservoir member and the channel element of Fig. 22, and the corner connector element of Fig. 24 mounted to the building structure of Fig. 27,
Fig. 29 is a front view of the reservoir member and the channel element of Fig. 22, and the corner connector element of Fig. 24 mounted to the building structure of Fig. 27,
Fig. 30 is an isometric view of a reservoir member and a channel element of another rainwater collection device according to the invention mounted to a building structure,
Fig. 31 is a front view of the reservoir member and the channel element of Fig. 30 mounted to the building structure of Fig. 30, and
Fig. 32 is a cross sectional end view of the reservoir member and the channel element of Fig. 30 mounted to the building structure of Fig. 30.

### Detailed Description

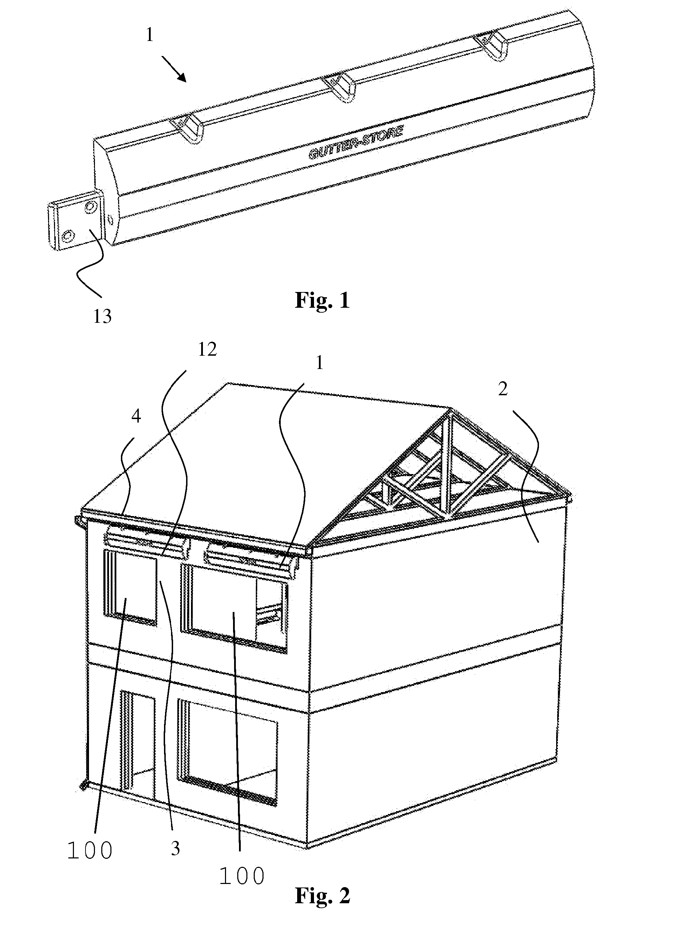

Referring to the drawings, and initially to Figs. 1 to 7 thereof, there is illustrated a rainwater collection device according to the invention.

The rainwater collection device comprises a first reservoir member 1, a second reservoir member 12, a channel gutter element 8, a rainwater filter, and an outlet pipe 11.

Each reservoir member 1, 12 may be attached to an external surface of a wall 3 of a building structure 2 beneath the eaves 4 of the building structure 2, and above the level of the upper surface of the second floor windows 100 of the building structure 2 (Fig. 2).

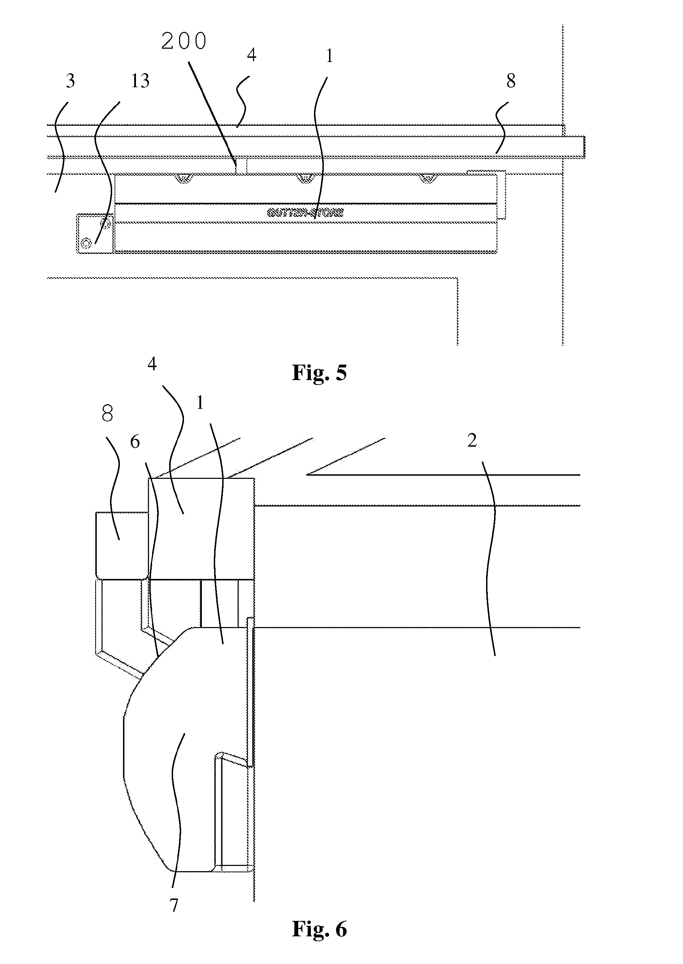

Each reservoir member 1, 12 is employed to store rainwater. Each reservoir member 1, 12 comprises an inlet port 6 to facilitate entry of rainwater into the interior 7 of the reservoir member 1, 12 (Fig. 6). The channel element 8 promotes flow of rainwater towards the inlet port 6. A connecting pipe 200 is employed to facilitate flow of rainwater from the channel element 8 into the reservoir member 1. The rainwater filter is located at the inlet port 6. In this case the rainwater filter is provided in the form of a mechanical filter between the gutter 8 and the reservoir member 1, 12.

Alternatively the rainwater filter may be provided in the form of a sponge insert in the gutter 8. Fig. 5 illustrates a pipe leading from the gutter 8 into the reservoir member 1.

As illustrated in Fig. 6, the channel element 8 is substantially 'U'-shaped in cross section. The channel element 8 is mounted to the building structure 2.

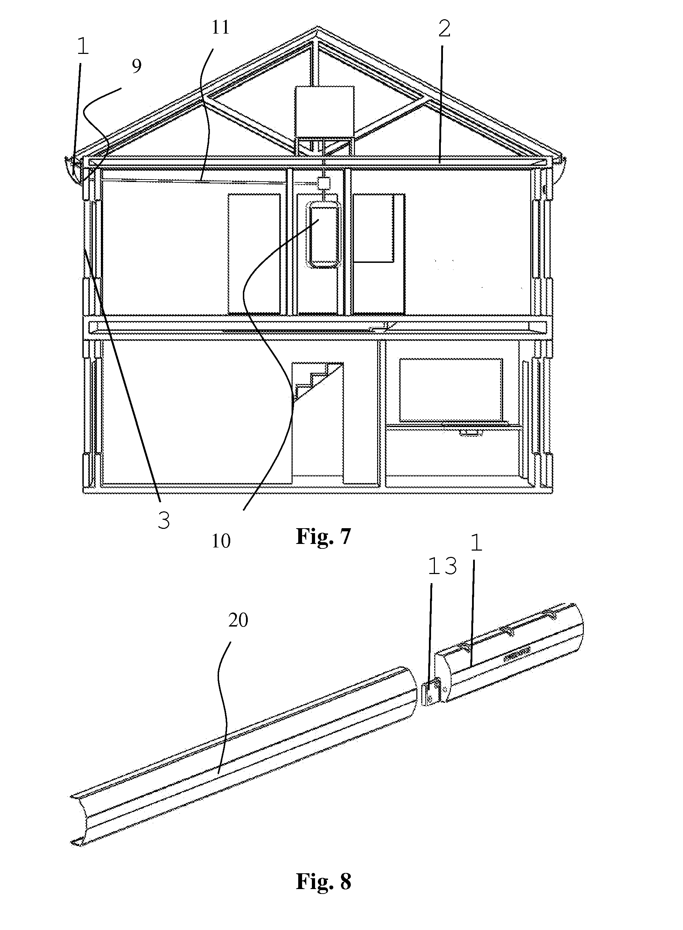

Each reservoir member 1, 12 comprises an outlet port 9 to facilitate exit of rainwater from the interior 7 of the reservoir member 1, 12. As illustrated in Fig. 7, the outlet pipe 11 connects the outlet port 9 in fluid communication with a water plumbing system 10 of the building structure 2. The rainwater flows under the action of gravitational forces from the outlet port 9 through the outlet pipe 11 to the water plumbing system 10 of the building structure 2. In this case the pipe 11 runs from the reservoir member 1, 12 directly to a three- way valve in the hot press. From here it is connected directly into the plumbing system 10. For a newly built structure 2, the outlet pipe 11 may be hidden between the walls in the house 2.

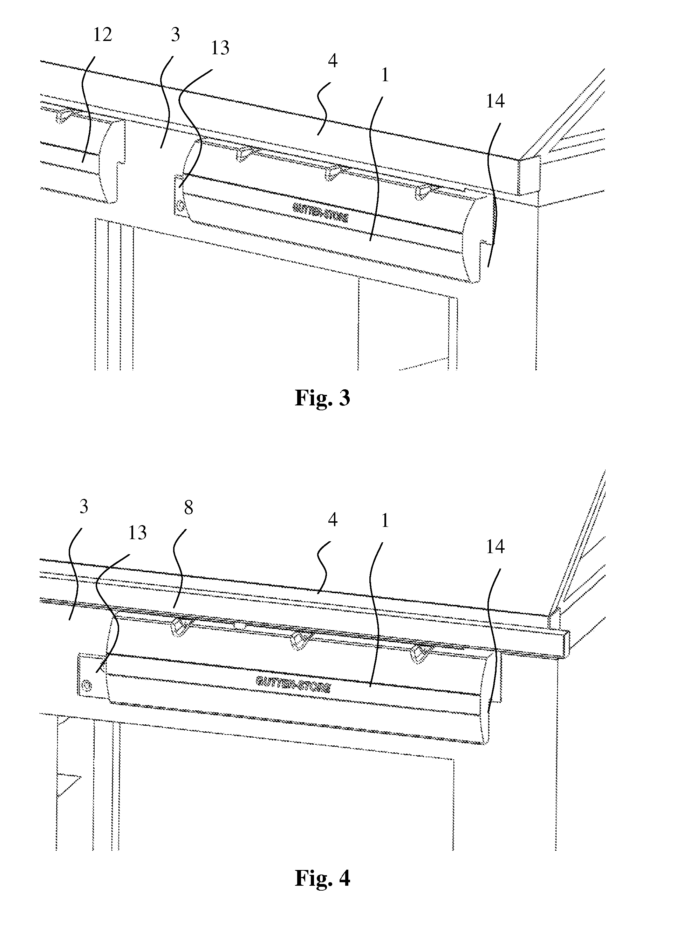

Each reservoir member 1, 12 comprises a protruding male element 13 and a corresponding female recess 14 (Fig. 3). The protruding male element 13 of the first reservoir member 1 may be inserted into the female recess 14 of the second reservoir member 12. In this manner the first reservoir member 1 may be nested with the second reservoir member 12 during storage, or during transport, or when both are attached to the external surface of the wall 3 of the building structure 2.

In this case each reservoir member 1, 12 is provided in the form of a rotational moulded tank, attached individually to the house 2 located below the eaves 4 of the house 2. Each reservoir member 1, 12 may be bolted to the wall 3. Holes are provided in the male element 13 to allow each reservoir member 1, 12 to be screwed to the wall 3. Each reservoir member 1, 12 may be used as a stand alone unit or the two reservoir members 1, 12 may be connected together side by side.

Each reservoir member 1, 12 may be of a UV resistant material, for example a plastic that has a UV additive.

Each reservoir member 1, 12 may include a ball cock to shut off the inlet to the three-way valve, when the reservoir member 1, 12 is full.

Each reservoir member 1, 12 may have excess space within the reservoir member 1, 12 to allow water to expand at temperatures at or close to 0°C, to ensure that the reservoir member 1, 12 does not burst when the water freezes.

Each reservoir member 1, 12 may be of any suitable dimensions. For example the length of each reservoir member 1, 12 may be 2 meters, the internal volume of each reservoir member 1, 12 may be 65 litres per meter.

The invention provides a system of collecting rainwater and directly feeding it into the plumbing 10 of the house 2. Rainwater falling on the roof is collected in the linear tanks 1, 12 located under the eaves 4 of the house 2. The system 10 may supply water for washing, or gardening, or toilets, or may be filtered to a drinking quality standard.

The invention provides a system to integrate rainwater collection with conventional plumbing 10 in dwellings 2 utilising gravity.

In use, each reservoir member 1, 12 is attached to the external surface of the wall 3 of the building structure 2 beneath the eaves 4 of the building structure 2.

Rainwater falling on the roof of the building structure 2 drains into the channel element 8. The channel element 8 promotes flow of the rainwater towards the inlet port 6 of each reservoir member 1, 12. The rainwater flows through the inlet port 6 into the interior 7 of each reservoir member 1, 12.

The rainwater is stored in the interior 7 of each reservoir member 1, 12 until required for use. When the rainwater is required for use, the rainwater flows from the interior 7 of each reservoir member 1, 12 through the outlet port 9 into the outlet pipe 11. The rainwater flows through the outlet pipe 11 into the water plumbing system 10 of the building structure 2.

The rainwater collection device of the invention may be employed for ongoing use for domestic water and may reduce the demand on a local water authority to provide water on an ongoing basis.

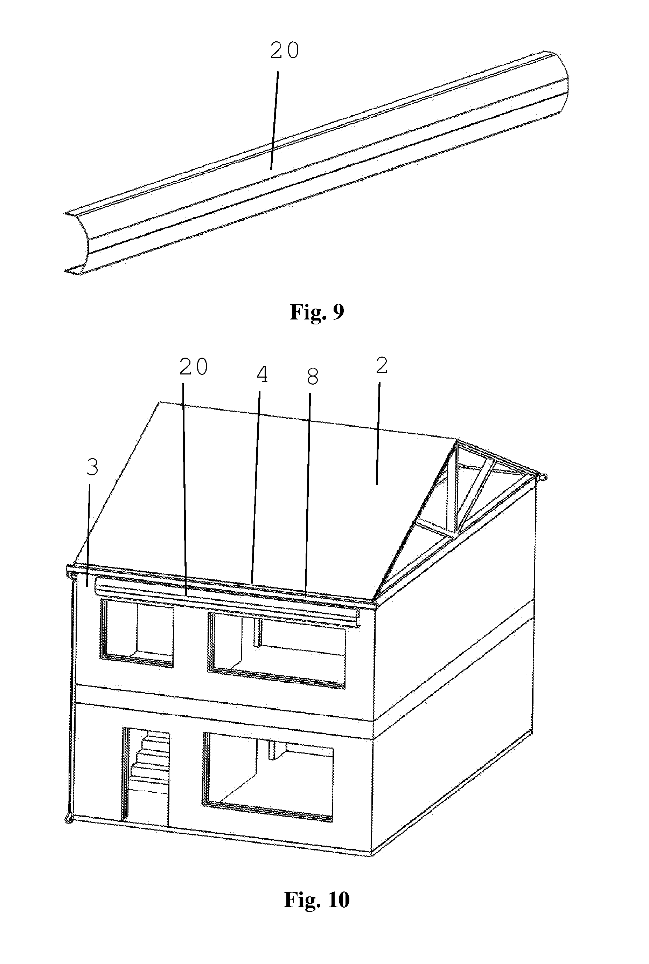

In Figs. 8 to 10 there is illustrated another rainwater collection device according to the invention, which is similar to the rainwater collection device of Figs. 1 to 7, and similar elements in Figs. 8 to 10 are assigned the same reference numerals.

In this case the rainwater collection device comprises a cover member 20 to cover the reservoir member 1 when the reservoir member 1 is attached to the external surface of the wall 3 of the building structure 2 beneath the eaves 4 of the building structure 2. The cover member 20 may be mounted to the reservoir member 1 when the reservoir member 1 is attached to the external surface of the wall 3 of the building structure 2 beneath the eaves 4 of the building structure 2 by sliding the cover member 20 over the reservoir member 1. The cover member 20 may be selectively removed from the reservoir member 1 while the reservoir member 1 remains attached to the external surface of the wall 3 of the building structure 2 beneath the eaves 4 of the building structure 2.

Fig. 8 illustrates the decorative cover 20 to hide the reservoir member 1.

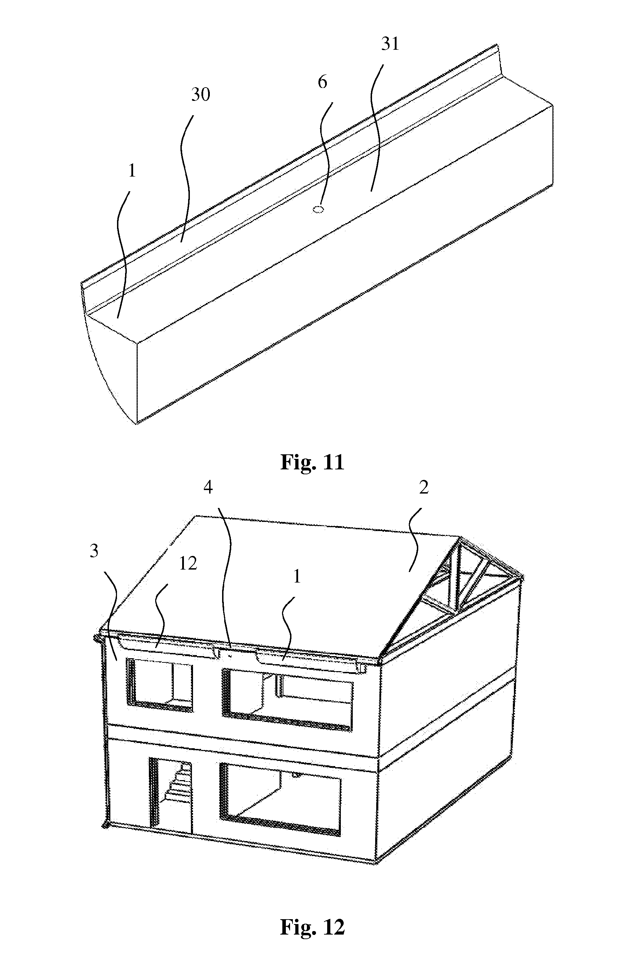

Figs. 11 to 13 illustrate a further rainwater collection device according to the invention, which is similar to the rainwater collection device of Figs. 1 to 7, and similar elements in Figs. 11 to 13 are assigned the same reference numerals.

In this case the rainwater collection device comprises a shield member 30 on the front of the curved reservoir member 1. The shield member 30 protrudes upwardly from an upper surface 31 of the reservoir member 1 to cover part of an external surface of the eaves 4 of the building structure 2. In this case the shield member 30 is formed integrally with the reservoir member 1.

Fig. 11 illustrates the hole 6 in the top 31 of the tank 1 to allow water to flow from the gutter 8 into the tank 1. A connecting pipe may be employed to facilitate flow of rainwater from the gutter channel element 8 into the tank reservoir member 1. The rainwater collection device may be installed onto an existing house.

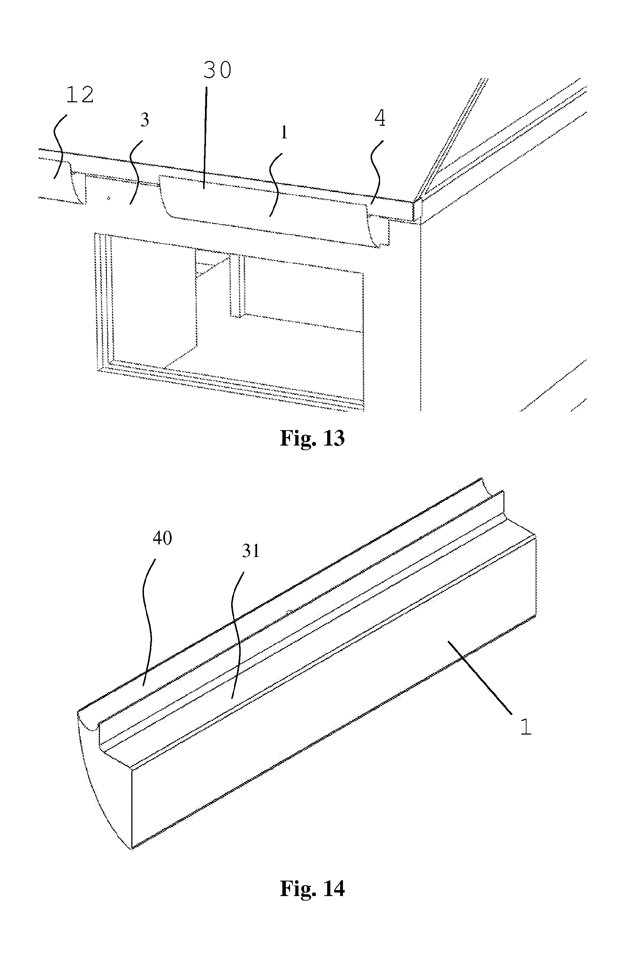

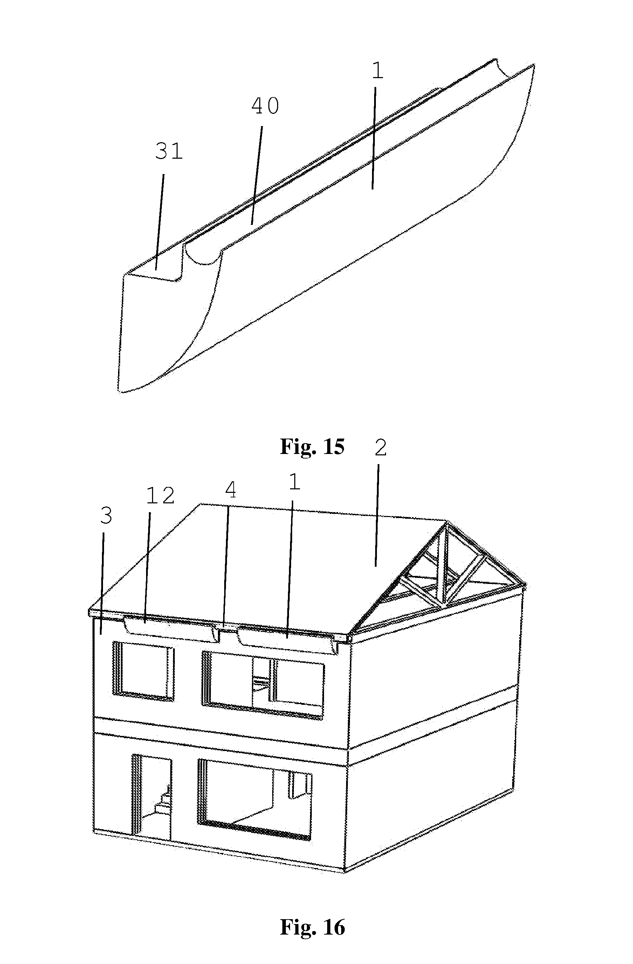

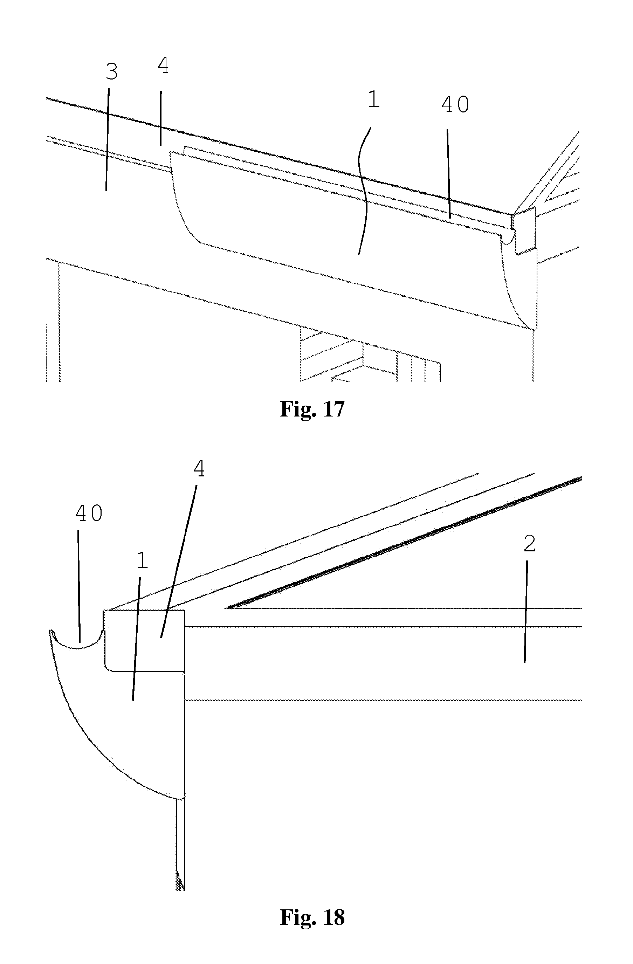

Referring to Figs. 14 to 18 there is illustrated another rainwater collection device according to the invention, which is similar to the rainwater collection device of Figs. 1 to 7, and similar elements in Figs. 14 to 18 are assigned the same reference numerals.

In this case the channel element 40 is not mounted directly to the building structure 2. Instead the channel element 40 is located along the upper surface 31 of the curved reservoir member 1. The channel element 40 is formed integrally with the reservoir member 1.

Fig. 14 illustrates the gutter 40 integrated into the tank shape.

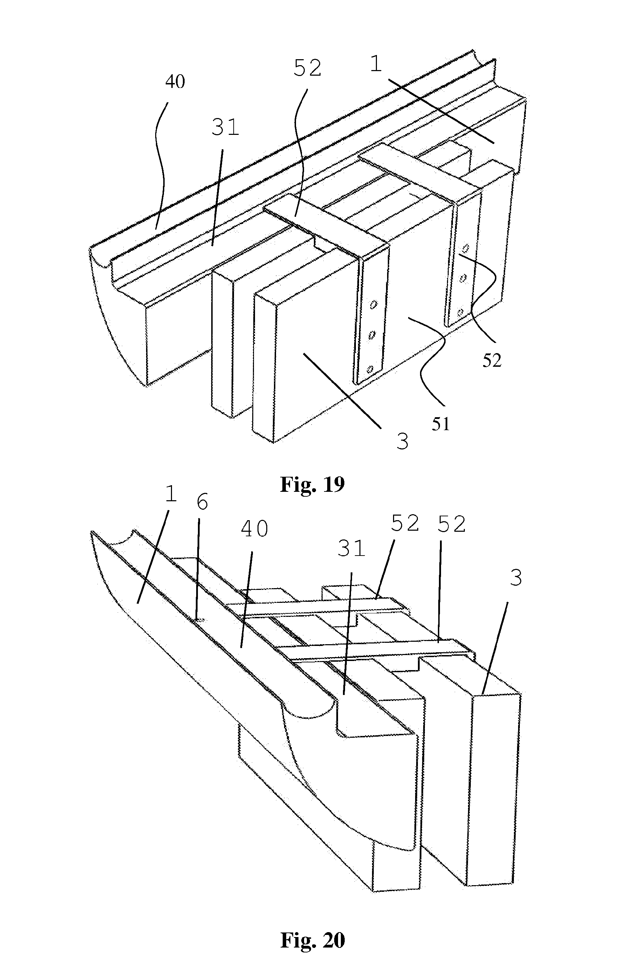

In Figs. 19 to 21 there is illustrated another rainwater collection device according to the invention, which is similar to the rainwater collection device of Figs. 14 to 18, and similar elements in Figs. 19 to 21 are assigned the same reference numerals.

In this case each reservoir member 1, 12 is attached to an internal surface 51 of the wall 3 of the building structure 2 beneath the eaves 4 of the building structure 2. Two bracket elements 52 are employed to attach the reservoir member 1, 12 to the internal surface 51 of the wall 3. Each bracket element 52 extends from the reservoir member 1, 12 inwardly over the top of the wall 3 and downwardly along the internal surface 51 of the wall 3 (Fig. 19).

Fig. 19 illustrates the brackets 52 used to hold the reservoir member 1, 12 in place. The brackets 52 are installed when the house 2 is being built to ensure the brackets 52 have sufficient strength to support the weight of the reservoir member 1, 12.

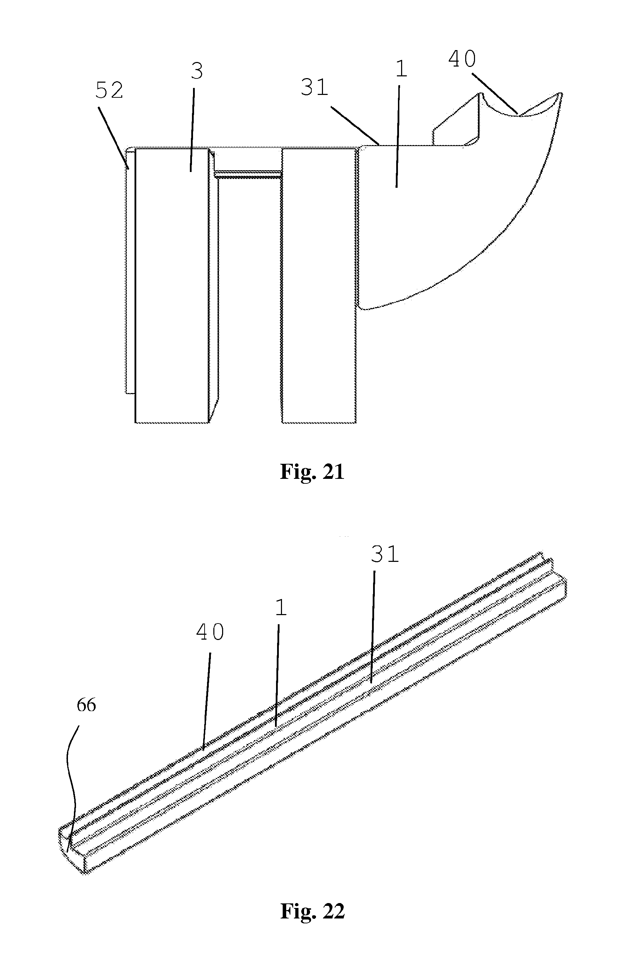

Figs. 22 to 29 illustrate a further rainwater collection device according to the invention, which is similar to the rainwater collection device of Figs. 14 to 18, and similar elements in Figs. 22 to 29 are assigned the same reference numerals.

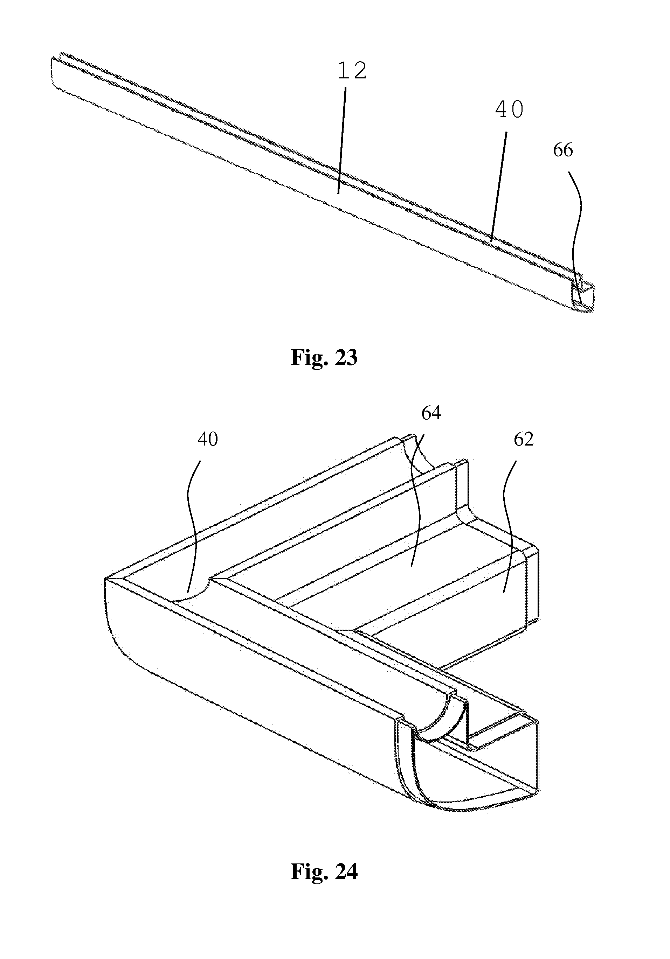

In this case each end 66 of the first reservoir member 1 is open (Fig. 22), and similarly each end 66 of the second reservoir member 12 is open (Fig. 23).

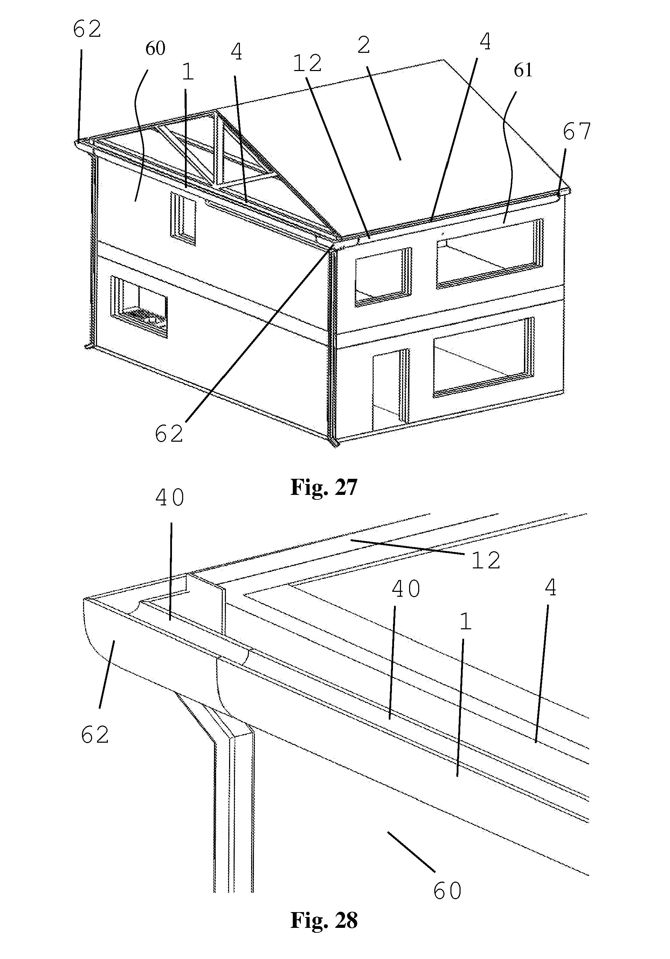

The first reservoir member 1 may be attached to an external surface of a first wall 60 of the building structure 2 beneath the eaves 4 of the building structure 2, and the second reservoir member 12 may be attached to an external surface of a second wall 61 of the building structure 2 beneath the eaves 4 of the building structure 2 (Fig. 27). When the house 2 is viewed in plan from above, the first wall 60 extends substantially perpendicular to the second wall 61. The rainwater collection device comprises a corner connector element 62 (Fig. 24) to connect one end 66 of the first reservoir member 1 in fluid communication with one end 66 of the second reservoir member 12 with the longitudinal axis of the first reservoir member 1 perpendicular to the longitudinal axis of the second reservoir member 12 (Fig. 27) when the house 2 is viewed in plan from above.

The channel element 40 is located along the upper surface 64 of the corner connector element 62 (Fig. 24). The channel element 40 is formed integrally with the corner connector element 62.

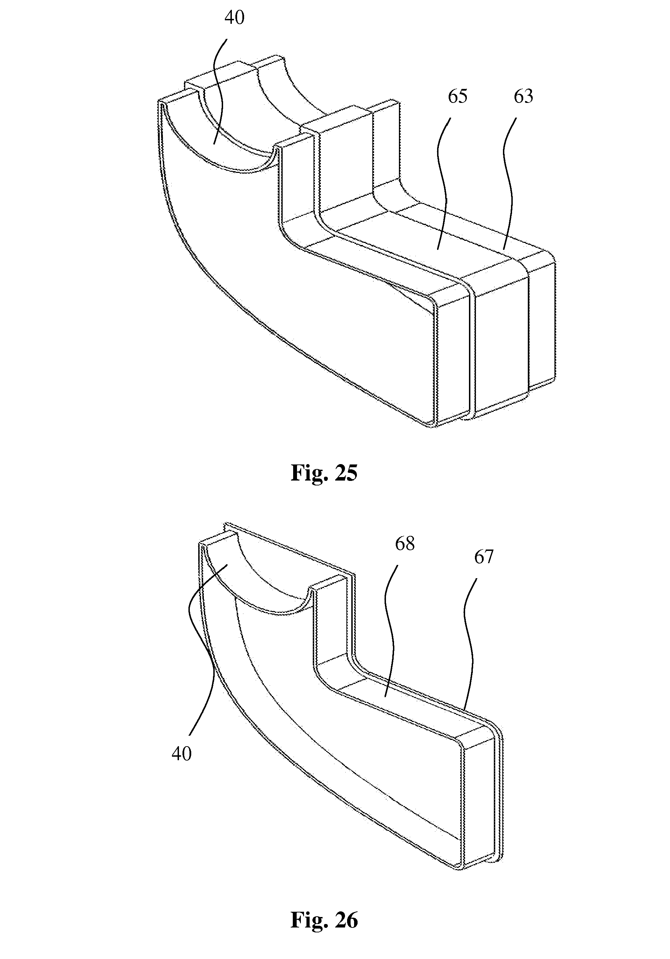

Alternatively the first reservoir member 1 may be attached to the external surface of the first wall 60 of the building structure 2 beneath the eaves 4 of the building structure 2, and the second reservoir member 12 may be attached to the external surface of the first wall 60 of the building structure 2 beneath the eaves 4 of the building structure 2. The rainwater collection device also comprises a straight connector element 63 (Fig. 25) to connect one end 66 of the first reservoir member 1 in fluid communication with one end 66 of the second reservoir member 12 with the longitudinal axis of the first reservoir member 1 parallel to and in-line with the longitudinal axis of the second reservoir member 12 when the house 2 is viewed in plan from above.

The channel element 40 is located along the upper surface 65 of the straight connector element 63 (Fig. 25). The channel element 40 is formed integrally with the straight connector element 63.

The rainwater collection device also comprises an end cap element 67 (Fig. 26) to close an end 66 of either reservoir member 1, 12. The channel element 40 is located along the upper surface 68 of the end cap element 67. The channel element 40 is formed integrally with the end cap element 67.

Each reservoir member 1, 12 does not include a protruding male element or a corresponding female recess, and the reservoir members 1, 12 are not nested together when attached to the external surface of the walls 60, 61.

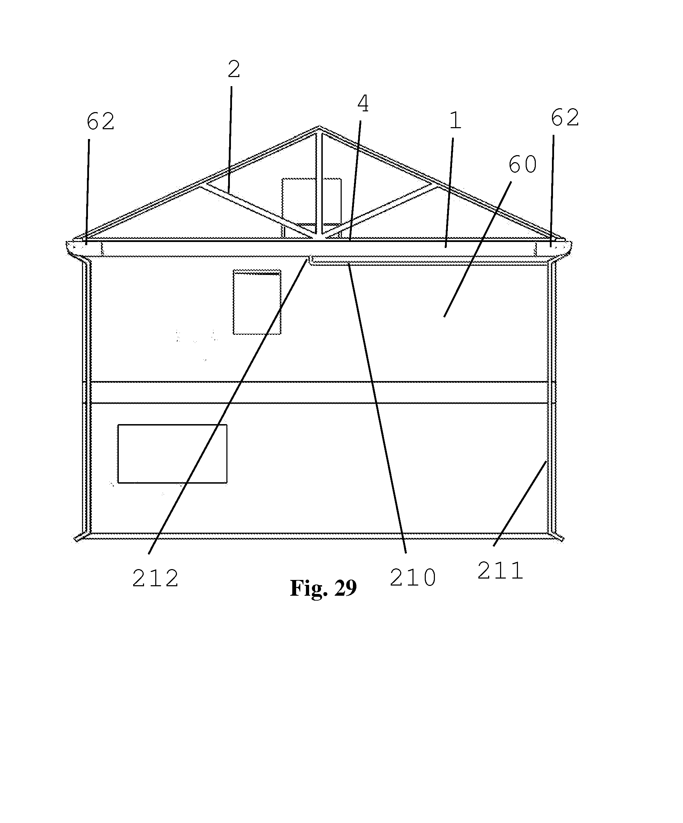

Each reservoir member 1, 12 comprises an overflow port 212 to facilitate exit of overflow rainwater from the interior 7 of the reservoir member 1, 12. The overflow port 212 may be located at the upper portion of the rear of the reservoir member 1, 12. As illustrated in Fig. 29, an overflow pipe 210 connects the overflow port 212 in fluid communication with a downpipe 211 of a water drainage system. Fig. 29 illustrates that when the collection device 1, 12 is full of water, there is an overflow outlet 210 to the conventional downpipe 211.

Fig. 27 illustrates the continuous tank 1, 12 around the house 2. The long tanks 1, 12 are located at the front 61 and side 60 of the house 2, the corner piece 62 is installed at the corners of the house 2, the end cap 67 is used to seal, and the joiner 63 joins sections of the tank 1, 12.

Fig. 22 illustrates the extruded plastic part 1 for the side 60 of the house 2. The extrusions 1, 12 may be cut to match any length, for example a length of 7.6 meters, to suit the dimensions of a standard semi detached house 2. Fig. 24 illustrates the corner joint 62, which may be an injection moulded part, used to extend around the corners of the house 2. Fig. 25 illustrates the joiner 63, which may be an injection moulded part, used to join two lengths of the reservoir members 1, 12. Fig. 26 illustrates the end cap 67, which may be an injection moulded part, used to seal ends of the reservoir members 1, 12. Fig. 27 illustrates the ccontinuous tanks 1, 12 located below the eaves 4 of the house 2. The gutter 40 is integrated into the tanks 1,12.

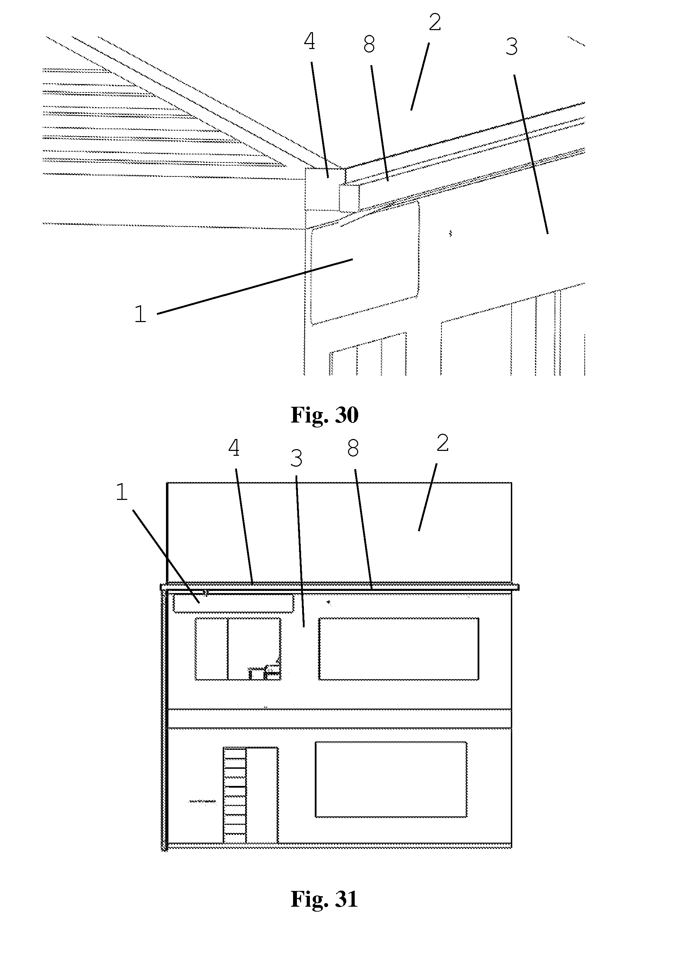

Referring to Figs. 30 to 32 there is illustrated another rainwater collection device according to the invention, which is similar to the rainwater collection device of Figs. 1 to 7, and similar elements in Figs. 30 to 32 are assigned the same reference numerals.

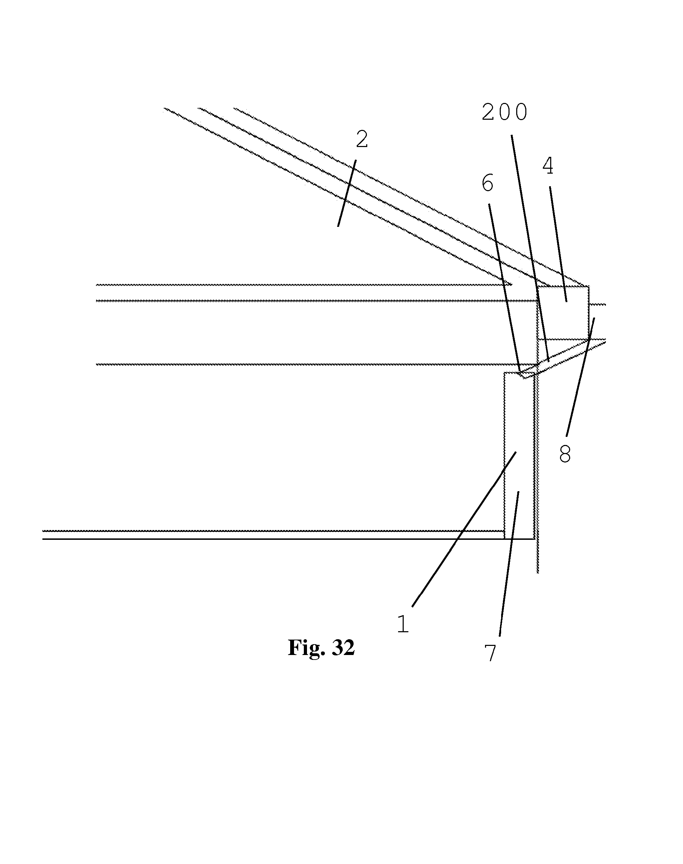

In this case the reservoir member 1 is housed within the building structure 2 embedded within the building structure 2. Fig. 32 illustrates the storage device 1 built into the top of the wall 3 as part of the outer leaf of the blockwork. The tank 1 is integrated into the wall 3.

The invention is not limited to the embodiments hereinbefore described, with reference to the accompanying drawings, which may be varied in construction and detail.

## Claims

1. A rainwater collection device comprising
a reservoir member for at least temporarily storing rainwater,
the reservoir member being configured to be mounted to a building structure.

2. A device as claimed in claim 1 wherein the reservoir member comprises an inlet port to facilitate entry of rainwater into the interior of the reservoir member.

3. A device as claimed in claim 2 wherein the device comprises means to promote flow of rainwater towards the inlet port.

4. A device as claimed in claim 3 wherein the flow promotion means comprises a channel element.

5. A device as claimed in claim 3 or 4 wherein the flow promotion means is located along an upper surface of the reservoir member.

6. A device as claimed in any of claims 3 to 5 wherein the flow promotion means is formed integrally with the reservoir member.

7. A device as claimed in any of claims 1 to 6 wherein the device comprises means to attach the reservoir member to an internal surface of a wall of a building structure.

8. A device as claimed in any of claims 1 to 7 wherein the reservoir member is configured to be mounted to a building structure beneath the eaves of the building structure.

9. A device as claimed in any of claims 1 to 8 wherein the device comprises means to cover at least part of the reservoir member.

10. A device as claimed in claim 9 wherein the cover means is mountable to the reservoir member.

11. A device as claimed in claim 10 wherein the cover means is selectively removable from the reservoir member.

12. A device as claimed in any of claims 1 to 11 wherein the device comprises means to cover at least part of an external surface of a building structure.

13. A device as claimed in claim 12 wherein the cover means is supported by the reservoir member.

14. A device as claimed in any of claims 1 to 13 wherein the device comprises a first reservoir member and a second reservoir member.

15. A device as claimed in claim 14 wherein the device comprises means to connect the first reservoir member in fluid communication with the second reservoir member.
